# FASCICULE DE BREVET EUROPEEN

(11) **EP 3 871 000 B1**
(45) Date de publication et mention de la délivrance du brevet: **23.08.2023**
(21) Numéro de dépôt: 19770105.5
(22) Date de dépôt: 23.09.2019
(51) Int. Cl.: G01S 7/521, B63B 21/66, B63G 8/42, G01S 15/00, G01S 7/524

(54) **SYSTÈME SONAR**
SONARSYSTEM
SONAR SYSTEM

(30) Priorité: 22.10.2018 FR 1801116
(43) Date de publication de la demande: 01.09.2021
(73) Titulaire: THALES, 92400 Courbevoie (FR)
(72) Inventeur: WARNAN, François, 29200 BREST (FR); BODILIS, Mathieu, 29200 BREST (FR)
(74) Mandataire: Atout PI Laplace
(86) Numéro de dépôt international: PCT/EP2019/075557
(87) Numéro de publication internationale: WO 2020/083587

(56) Documents cités:
- EP-A1- 0 516 511
- WO-A1-2017/035660
- DE-A1-102015 116 750
- FR-A1- 2 925 231
- US-B1- 9 001 623
- G. Murdoch: "the joint saclantcen/USA towed vertically directive source TVDS", , 1 mars 2006 (2006-03-01), pages 1-18, XP055601995, Extrait de l'Internet: URL:https://openlibrary.cmre.nato.int/bits tream/handle/123456789/370/SM-298-UU.pdf?s equence=1&isAllowed=y [extrait le 2019-07-03]

## Description

L'invention concerne le domaine des systèmes sonars du type comprenant une partie dite active destinée à être remorquée par un navire porteur de surface via un câble. La partie active comprend une antenne d'émission d'ondes acoustiques allongée selon un axe longitudinal de l'antenne destiné à s'étendre sensiblement verticalement en fonctionnement de sorte à émettre des ondes acoustiques principalement dans un plan horizontal. Le système sonar comprend classiquement une antenne de réception permettant de détecter des échos issus des ondes acoustiques émises par l'antenne d'émission.

Ce type d'antennes présente généralement une longueur de plusieurs mètres et est donc très encombrante ce qui oblige à concevoir de grandes ouvertures à l'arrière du navire porteur pour permettre de récupérer ces antennes. En outre il est fréquent qu'il faille créer une tranchée (« recess » en terminologie anglo-saxonne) dans le pont principal afin de pouvoir stocker l'antenne d'émission qui est trop longue pour être logée entre le pont principal et le pont supérieur.

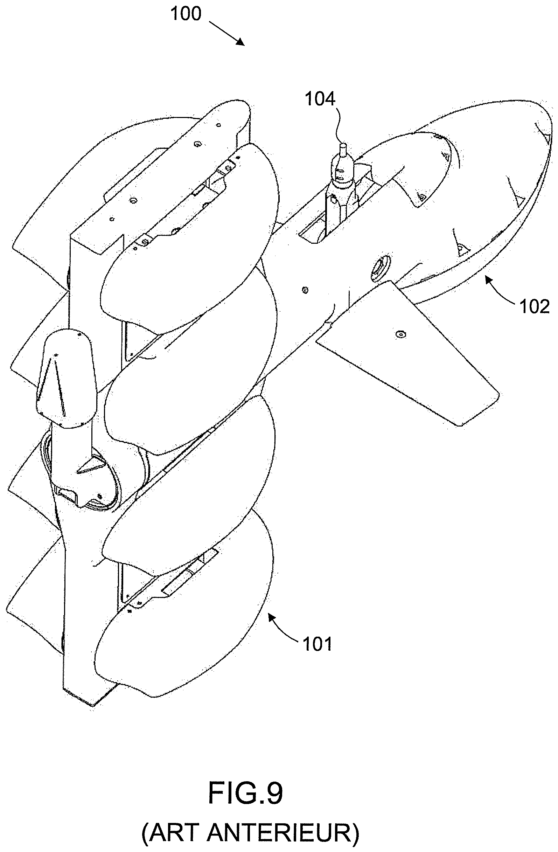

On connaît une solution représentée sur la figure 9, dans laquelle la partie active est du type poisson 100 remorqué. Ce poisson 100 comprend l'antenne d'émission 101 et un corps pesant 102, c'est à dire à flottabilité négative. Le poisson 100 est profilé hydro-dynamiquement, équilibré et relié au câble 104 de sorte que l'antenne soit verticale, comme représenté sur la figure 9, lorsqu'elle est remorquée par le navire. Le corps pesant 102 est situé devant l'antenne d'émission 101 lors du remorquage et le câble 104 tire le poisson par le dessus du corps pesant 102.

Pour venir récupérer ce poisson 100, initialement remorqué, à bord d'un navire porteur, le système sonar comprend un treuil permettant d'enrouler et de dérouler le câble, un bras de récupération embarqué à bord du navire porteur et présentant une forme de flèche à l'extrémité de laquelle est agencée une butée traversée par le câble. Afin de récupérer le poisson à bord du navire, on vient positionner la butée juste au-dessus de la surface de l'eau. La phase de récupération comprend une phase de capture, lors de laquelle le treuil enroule le câble, le câble vient soulever le poisson dont le corps vient alors en appui contre la butée. La butée bloque alors le mouvement vertical du poisson vers le haut par rapport au bras. Le bras est alors basculé en maintenant le câble tendu pour lever le poisson en le maintenant bloqué contre la butée, puis avancé vers l'avant du navire porteur pour rentrer le poisson à l'intérieur du navire porteur en le faisant passer à travers une ouverture ménagée dans la coque du bateau. Le poisson est ensuite stocké à l'intérieur du navire porteur.

Lors de la récupération du poisson, de la capture jusqu'à son stockage, l'antenne d'émission reste toujours verticale.

La capture du poisson 100 n'est pas sans présenter quelques difficultés surtout lorsque la mer est agitée. Lors de la capture, la butée étant juste au-dessus de la surface de l'eau et l'antenne d'émission étant verticale, environ la moitié de l'antenne est hors de l'eau. Or, la sortie de l'eau de la moitié de l'antenne modifie la poussée d'Archimède exercée sur le poisson ce qui a pour effet de modifier l'assiette du poisson qui peut basculer vers l'arrière ce qui peut rendre plus difficiles et aléatoires la bonne capture du poisson et sa récupération à bord du navire et son stockage.

Des vagues déferlantes et des paquets de mer peuvent également venir heurter la partie émergée de l'antenne d'émission et modifier la gîte du poisson et avoir des conséquences similaires.

Par ailleurs, le couplage d'un mouvement de pendule lié à la longueur de câble (mouvement excité par les mouvements du navire porteur et les remous de l'hélice ou des hélices), de lacet et de gîte rend plus aléatoire la bonne capture du poisson. Ce mouvement est connu des pilotes d'avion sous le nom de « roulis hollandais » et il peut se comparer au mouvement d'une bille dans une gouttière ce qui peut contrarier la phase de capture. Ces mouvements aléatoires peuvent empêcher le poisson de venir en regard de la butée ce qui peut contrarier sa capture. Le poisson peut, par exemple, rester bloqué sur un des côté de la butée ou à l'arrière de cette dernière.

Dans ces situations, l'antenne est mise en danger de chocs violents qui peuvent l'endommager. Pour se sortir de ces situations critiques, il faut relâcher suffisamment de câble et tenter une nouvelle capture.

On connaît d'autres types de systèmes sonars à grande antenne verticale comme, par exemple, ceux divulgués dans les documents US 9,001,623 et WO 2017/035660, dans lesquels l'antenne d'émission est reliée au câble via un corps. Ces systèmes sont configurés de sorte que l'antenne s'étende verticalement lorsqu'elle est remorquée par un câble. L'antenne est apte à pivoter par rapport au corps autour d'un axe horizontal perpendiculaire à l'axe de déplacement de l'antenne remorquée dans l'eau de sorte à s'étendre longitudinalement globalement parallèlement à l'axe du câble dans une configuration de capture. Ces systèmes comprennent des moyens de récupération qui permettent de ramener l'antenne d'émission à bord du navire porteur uniquement en enroulant le câble, le câble tirant alors le poisson vers le navire selon l'axe du câble.

De la sorte, lorsque l'antenne passe au travers de l'ouverture ménagée dans le navire, son encombrement limité dans un plan transverse à l'axe du navire permet de limiter la taille de cette ouverture. Ces dispositifs présentent l'inconvénient d'exposer l'antenne, qui n'est pas bloquée mais simplement tendue mollement entre deux câbles, aux paquets de mer en cas de mer agitée à sa sortie de l'eau ce qui peut compromettre son passage au travers de l'ouverture et l'exposer à des chocs. L'intervention d'un opérateur pour diriger la récupération de l'antenne est alors nécessaire mais dangereuse. Par ailleurs, le stockage d'une telle antenne d'émission s'étendant longitudinalement selon l'axe du navire une fois embarquée à bord du navire, nécessite un navire porteur de grande longueur susceptible d'offrir un local arrière de volume libre de grande longueur. Par ailleurs, cette orientation est défavorable au stockage de l'antenne autour d'un touret enroulant tout le câble et l'antenne sans séparation de l'antenne du câble. En outre, les surfaces horizontales ayant une fonction d'empennage horizontal lorsque l'antenne est verticale ne conservent pas leur fonction d'empennage lorsque l'antenne s'étend longitudinalement globalement selon l'axe du câble. Ces surfaces deviennent un frein au déplacement de l'antenne qui perd son profil hydrodynamique. Dans le système sonar du document US 9,001,623 l'antenne d'émission est reliée au câble via un corps de grande longueur dans laquelle est logée l'antenne et qui est profilé de façon à limiter ce frein. Ce corps présente également une fonction de protection de l'antenne lors de sa récupération à bord du navire. Toutefois, le stockage d'un corps de grande longueur à bord d'un navire est difficile et oblige à prévoir des navires de grande longueur. Par ailleurs ce corps limite l'accessibilité à l'antenne d'émission pour sa maintenance.

Un but de l'invention est de limiter au moins un des inconvénients précités.

A cet effet, l'invention a pour objet un système sonar comprenant un poisson comprenant un premier corps relié à un deuxième corps, le premier corps étant allongé selon un axe longitudinal et comprenant une pluralité d'émetteurs acoustiques répartis le long de l'axe longitudinal. Le système sonar comprend un câble relié au deuxième corps et via lequel un navire porteur de surface est destiné à remorquer le poisson. Le premier corps est monté pivotant, par rapport au deuxième corps, autour d'un axe de rotation de sorte que, le premier corps est apte à passer, par pivotement par rapport au deuxième corps autour de l'axe de rotation, d'une position opérationnelle à une position de capture. Lorsque le poisson est totalement immergé et remorqué par le navire porteur, l'axe de rotation est sensiblement un axe de déplacement du poisson, l'axe longitudinal du premier corps est sensiblement vertical dans la position opérationnelle et sensiblement horizontal dans la position de capture.

Avantageusement, l'axe de rotation s'étend sensiblement horizontalement lorsque le poisson totalement est remorqué par le navire porteur.

Avantageusement, le câble est relié au deuxième corps de sorte que le câble tire le poisson par le dessus du deuxième corps.

Avantageusement, l'axe de rotation est situé sensiblement à égale distance entre deux extrémités longitudinales du premier corps.

Avantageusement, le corps est sensiblement symétrique par rapport au plan vertical contenant l'axe de rotation et le câble et par rapport à un plan sensiblement horizontal contenant l'axe de rotation, le premier corps étant dans la position opérationnelle. Avantageusement, cela est obtenu lorsque le poisson étant totalement immergé et remorqué par le navire.

Avantageusement, un centre de gravité du premier corps est situé sur l'axe.

Avantageusement, le premier corps comprend un premier ensemble d'au moins un empennage étant vertical et ayant une fonction de dérive lorsque le premier corps est dans la position opérationnelle et au moins un deuxième ensemble d'au moins un empennage étant horizontal lorsque le premier corps est dans la position opérationnelle. Avantageusement, cela est obtenu lorsque le poisson étant totalement immergé et remorqué par le navire.

Avantageusement, le poisson présente une flottabilité négative.

Avantageusement, le système sonar comprend des moyens de manutention comprenant un treuil permettant d'enrouler et de dérouler le câble et un bras comprenant une extrémité munie d'une butée, le bras étant apte à être maintenu dans une position de réception par rapport au navire porteur, dans laquelle la butée est située au-dessus de la surface de l'eau à une première hauteur par rapport à la surface de l'eau, la butée étant traversée par le câble de sorte que le deuxième corps est apte à venir en appui sur la butée lors de l'enroulement du câble de sorte à bloquer le mouvement du deuxième corps par rapport au bras vers le haut, le bras étant mobile par rapport au navire porteur de sorte à être apte à être dans une position de rangement par rapport au navire porteur dans laquelle le poisson est embarqué à bord du navire porteur, le deuxième corps étant en butée contre la butée.

Le système sonar comprend avantageusement le navire porteur. Le navire porteur est avantageusement relié au poisson via le câble.

D'autres caractéristiques, détails et avantages de l'invention ressortiront à la lecture de la description faite en référence aux dessins annexés donnés à titre d'exemple et qui représentent, respectivement :
- la figure 1 représenté schématiquement un système sonar selon l'invention,
- la figure 2 représente schématiquement un exemple d'un poisson d'un système sonar selon l'invention dans lequel un actionneur et des émetteurs sont rendus visibles par transparence, le poisson étant dans la position opérationnelle
- la figure 3 représente schématiquement un exemple d'un poisson d'un système sonar selon l'invention, le poisson étant dans la position opérationnelle,
- la figure 4 représente schématiquement le poisson de la figure 3, dans la position de capture,
- la figure 5 représente schématiquement en perspective le système sonar lors d'une étape de capture, un bras de moyens de manutention étant dans une position de capture
- la figure 6 représente schématiquement en vue de côté le système sonar de la figure 5,
- la figure 7 représente schématiquement en perspective le système sonar lorsque le bras de la figure 5 est dans une position de transfert,
- la figure 8 représente schématiquement en vue de côté le système sonar lorsque le bras est dans une position de rangement,
- la figure 9, déjà décrite, représente le poisson de l'art antérieur.

D'une figure à l'autre, les mêmes éléments sont repérés par les mêmes références.

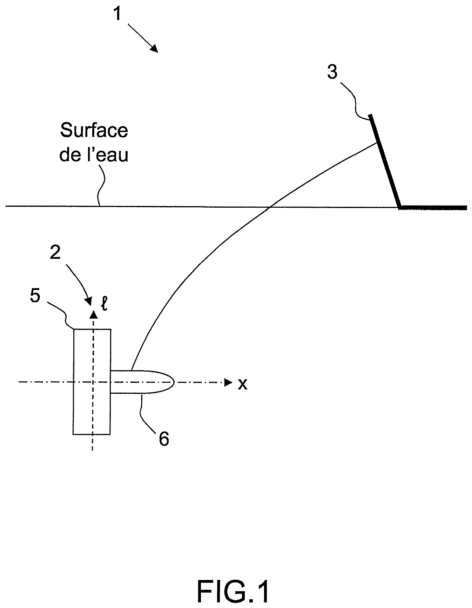

La figure 1 représente un exemple de système sonar 1 selon l'invention.

Ce système sonar 1 comprend un poisson 2, destiné à être remorqué par un navire porteur 3 de surface via un câble 4. Le navire porteur 3 de surface est destiné à se déplacer à la surface de l'eau, par exemple uniquement à la surface de l'eau. Lorsque le navire porteur 3 remorque le poisson 2, le navire porteur 3 avance à une vitesse non nulle selon l'axe du navire vers l'avant. Le poisson 2 est remorqué derrière le navire porteur 3 et avance aussi vers l'avant.

Le poisson 2 comprend un premier corps 5 relié à un deuxième corps 6 reliant le premier corps 5 au câble 4.

Le corps 6 est relié au câble 4 via des moyens d'accrochage 40 permettant de relier le câble 4 au corps 6.

Le poisson 2 présente une flottabilité négative. Cette flottabilité négative est avantageuse pour immerger le poisson en profondeur aux faibles vitesses de remorquage.

Le premier corps 5 présente une forme allongée selon un axe longitudinal l.

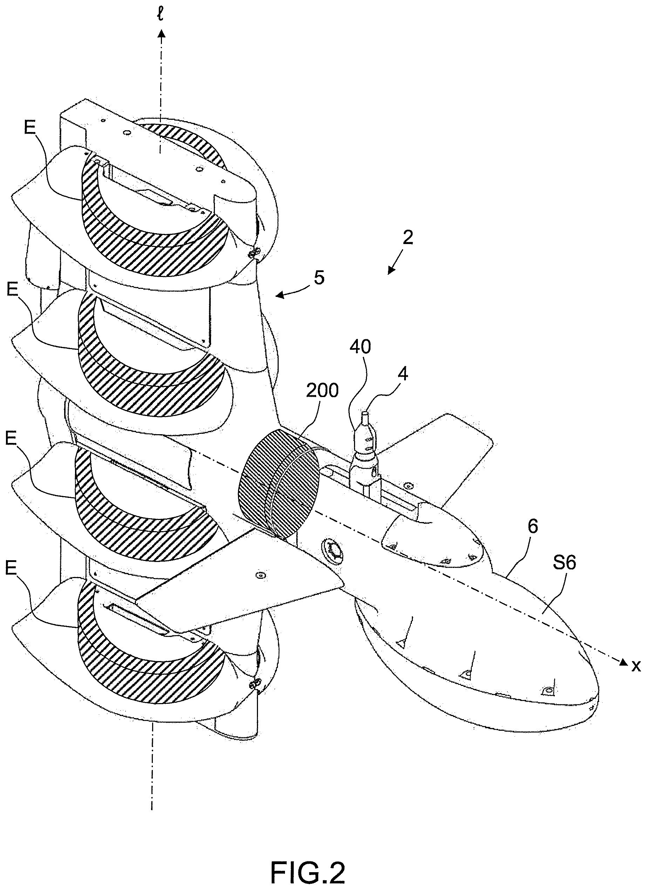

Le premier corps 5 comprend une pluralité d'émetteurs acoustiques E adjacents selon l'axe longitudinal l comme cela est représenté sur la figure 2. Les émetteurs acoustiques E forment, par exemple, une antenne d'émission d'ondes acoustiques. Les émetteurs acoustiques E présentent par exemple une forme d'anneau dont le centre passe par l'axe l ou de tube d'axe l.

L'antenne ou les émetteurs acoustiques E sont destinés à fonctionner lorsque le premier corps 5 est totalement immergé. Le premier corps 5 est alors à une profondeur plus importante que le corps 3.

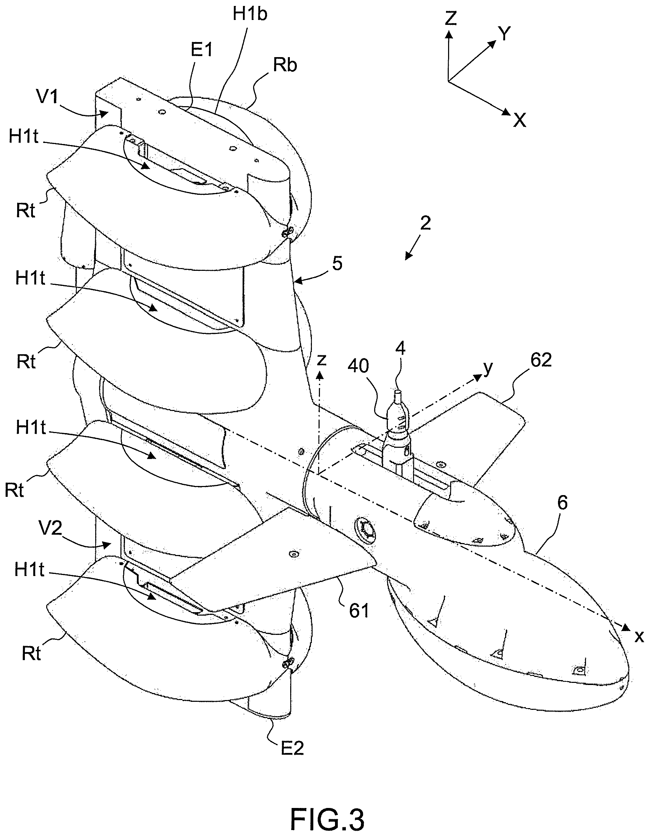

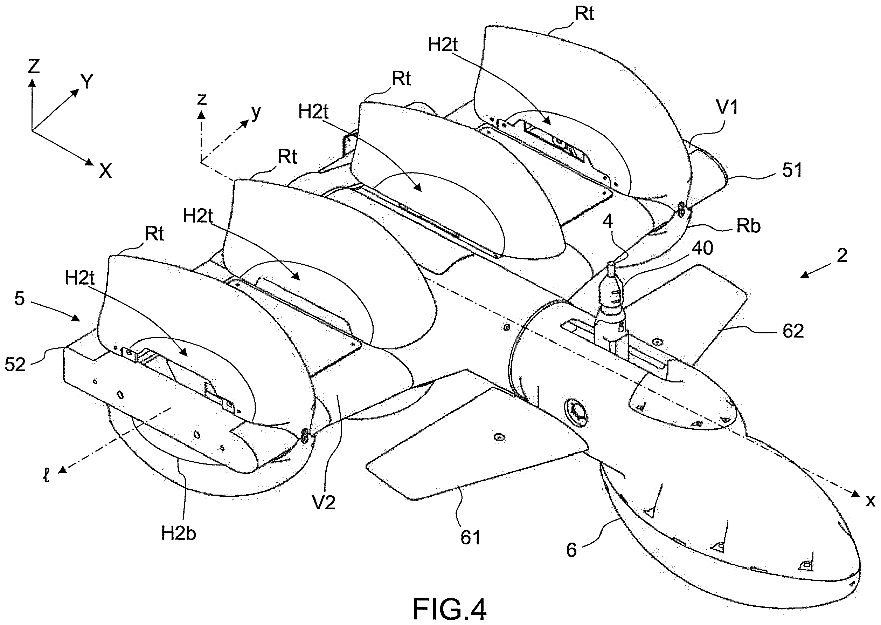

Selon l'invention, le premier corps 5 est monté pivotant par rapport au deuxième corps 6 autour d'un axe de rotation x solidaire du deuxième corps 6 de sorte que le premier corps 5 soit apte à occuper une position opérationnelle, visible sur les figures 1 et 3 , et une position de capture, visible sur la figure 4, par rapport au deuxième corps 6. Le premier corps 5 passe de la position opérationnelle à la position de capture par rotation autour de l'axe de rotation x par rapport au deuxième corps 6. Ces positions sont des positions angulaires du premier corps 5 par rapport au deuxième corps 6 autour de l'axe de rotation x.

Avantageusement, le premier corps 5 ne se déforme pas lors du passage de la position opérationnelle à la position de capture ou présente la même forme dans ces deux positions.

Le repère orthogonal x, y, z représenté sur les figures 3 et 4, est un référentiel lié au deuxième corps 6 comprenant trois axes orthogonaux x, y et z. Le repère orthogonal X, Y, Z représenté sur les figures 3 et 4 est un référentiel orthogonal lié à la terre, l'axe Z étant vertical et les axe X et Y définissant le plan horizontal, le navire porteur 3 se déplaçant selon l'axe X.

Le poisson 2 est profilé hydro-dynamiquement, équilibré et relié au câble 4 de sorte que lorsque le poisson 2 est totalement immergé et remorqué par le navire 3 via le câble 4, l'axe longitudinal l de l'antenne dans la position opérationnelle est orienté selon l'axe z qui est alors sensiblement vertical (orienté selon l'axe vertical Z du référentiel terrestre) comme représenté sur la figure 3. Le poisson 2 est également profilé hydro-dynamiquement, équilibré et relié au câble 4 de sorte que l'axe de rotation x et l'axe y sont destinés à s'étendre sensiblement horizontalement lorsque le poisson 2 est totalement immergé et remorqué par le navire porteur 3.

Lorsque le poisson 2 est totalement immergé et remorqué par le navire porteur 3, le poisson 2 se trouve à une profondeur plus importante que le navire porteur 3.

L'axe de rotation x est l'axe de déplacement du poisson 2 lorsque le poisson 2 est remorqué par le navire porteur 3.

Le poisson 2 est profilé hydro-dynamiquement, équilibré et relié au câble de sorte que son axe de déplacement est sensiblement horizontal lorsque le poisson 2 se déplace à une profondeur prédéterminée. Le poisson 2 se déplace à profondeur prédéterminée lorsque la longueur du câble 4 séparant le poisson du treuil est fixe et lorsque le navire de surface se déplace à vitesse constante en ligne droite. L'axe de déplacement du poisson 2 est donc sensiblement parallèle à l'axe de déplacement du navire porteur 3.

Avantageusement, le premier corps 5 pivote d'un angle de π/2 radians par rapport au deuxième corps 6, autour de l'axe de rotation x, pour passer de la position opérationnelle à la position de capture.

L'équilibrage du poisson est défini par la répartition des masses du poisson.

Comme visible sur la figure 4, l'axe longitudinal l est sensiblement horizontal lorsque le premier corps 5 est dans la position de capture et le poisson 2 totalement immergé est remorqué par le navire porteur 3.

Le système sonar 1 comprend également un actionneur permettant de faire pivoter le premier corps 5 par rapport au deuxième corps 6 autour de l'axe x pour faire passer le premier corps 5 de la position opérationnelle à la position de capture et inversement.

Le poisson 2 dont le premier corps 5 occupe la position de capture lorsqu'il approche du navire porteur 3 présente ainsi un encombrement vertical limité ce qui permet de ménager, dans la coque du navire porteur 3, une ouverture 8 de hauteur limitée selon l'axe Z. Or, il est plus aisé de ménager, dans la coque d'un navire porteur, une ouverture de grande dimension selon l'axe y qu'une ouverture de grande hauteur qui peut être amenée à traverser le pont d'un bateau ce qui nécessite de modifier la structure du navire, par exemple en ménageant une ouverture dans le pont (il est presque impossible de pratiquer une grande porte en hauteur si le bateau n'a pas été conçu dès le départ avec cette contrainte).

Par ailleurs, cette solution permet de stocker facilement le poisson 2. En effet, le premier corps 5 présentant un encombrement vertical limité, il n'est pas nécessaire de ménager une tranchée sur le pont du bateau.

Lorsque le premier corps 5 est dans la position de capture, une fois le poisson 2 récupéré à bord du navire, le poisson 2 présente une longueur limitée selon l'axe longitudinal du navire porteur 3 ce qui est bénéfique pour le stockage du poisson. Il est en effet plus aisé de stocker un poisson large et de longueur limitée selon l'axe x qu'un poisson de plus grande longueur selon l'axe x et de faible largeur selon l'axe y. L'invention est donc particulièrement avantageuse, du point de vue de la compacité de l'antenne selon l'axe longitudinal du porteur, pour le stockage des antennes de grande longueur.

Le repliement du premier corps 5 selon l'axe y permet d'accéder facilement à ce dernier pour sa maintenance.

Cette solution permet, en faisant passer le premier corps 5 de la position opérationnelle à la position de capture avant de venir récupérer le poisson 2 à bord du navire 3, de réduire drastiquement la hauteur du poisson 2 selon l'axe Z, plus particulièrement la hauteur de sa portion émergée. Les efforts aléatoires (liés aux paquets de mer) qui s'exercent sur lui et qui le déstabilisent sont alors considérablement réduits. Cela favorise la récupération du poisson 2 et limite les risques de heurts entre le poisson 2 et le navire 3 lors de la phase de récupération du poisson en cas de mer formée.

La solution proposée est également compatible d'une solution de l'art antérieur, du type de celle représentée sur la figure 9, comprenant des moyens de manutention du poisson 2 du type permettant de capturer poisson 2 préalablement à sa récupération à bord du navire porteur 3. Ce type de systèmes sonar permet de faciliter sa récupération à bord du navire en limitant les risques de chocs et les interventions d'opérateurs.

Le premier corps 5 peut présenter une longueur de plusieurs mètres, de l'ordre de 2 mètres ou plus, pour obtenir des performances acoustiques permettant de détecter les nouvelles menaces sous-marines de plus en plus rapides et silencieuses. Ces grandes antennes ne sont pas nécessairement plus lourdes mais elles présentent de plus grands moments quadratiques (ou inerties polaires) ce qui ralentit les mouvements du poisson mais les rendent irrésistibles.

L'invention permet, pendant la phase de capture du poisson, de modifier la matrice des inerties du poisson au bénéfice de la stabilité du poisson. En effet, en basculant l'antenne de sorte que son axe longitudinal s'étende suivant l'axe y, on augmente considérablement l'inertie du poisson suivant Z (en réduisant sa hauteur selon Z). Le grand moment de surface suivant Z est sans effet indésirable pendant la navigation courante en immersion mais se révèle gênant au moment de la récupération du poisson lorsque la longueur du câble permet d'exciter en couplage une fréquence de pendule proche de la fréquence suivant l'axe Z. Le poisson est donc bien loin de naviguer en ligne droite et la phase délicate de la capture peut mal se passer.

En basculant l'antenne du poisson suivant Y, on réduit considérablement le moment des surfaces suivant Z, ce qui est bénéfique pour la stabilité en lacet et donc pour l'alignement avec d'éventuels moyens de manutention du poisson permettant de capturer le poisson avant son entrée dans le navire et/ou pour l'alignement avec l'ouverture 8. On réduit également l'inertie moyenne selon Y. L'avantage est d'avoir un poisson qui est très peu ou plus du tout sollicité en Y (par les paquets de mer), très amorti hydro-dynamiquement en Y puisque toute l'antenne est dans l'eau et qui présente une inertie réduite. L'ensemble fait qu'il n'y a presque plus de mouvement de gîte et de roulis.

L'actionneur 200 est avantageusement apte à bloquer le premier corps 5 dans les positions opérationnelles et de capture. Par exemple, l'actionneur 200 est un moteur rotatif.

En variante, le système sonar comprend des moyens de verrouillage permettant de maintenir le premier corps 5 par rapport au deuxième corps 6 dans les positions de capture et opérationnelles. L'actionneur est apte à assurer le passage de la position opérationnelle à la position de capture, et avantageusement mais non nécessairement, inversement, lorsque le poisson est immergé et remorqué par le navire porteur de surface 3.

Le deuxième corps 6 est relié au câble 4 de sorte que le câble 4 tire le deuxième corps 6 par le dessus lors du remorquage du poisson 2. Autrement dit, le câble 4 est fixé sur la partie S6 du deuxième corps 6 ou relié à cette partie qui est destinée à être tournée vers la surface de l'eau lors du remorquage du poisson 2, c'est-à-dire sur le dos du deuxième corps 6.

Avantageusement, le deuxième corps 6 est situé devant le premier corps 5 selon l'axe de déplacement du poisson 2 dans le sens du déplacement du poisson lors du remorquage par le navire porteur 3.

Le système sonar 1 comprend également des moyens de manutention 7 permettant de récupérer le poisson 2, initialement remorqué par le navire porteur 3, à bord du navire porteur 3, en le faisant passer à travers d'un ouverture 8 ménagé dans la coque du navire, et inversement de le mettre à l'eau lorsqu'il est initialement embarqué à bord du navire 7.

Les moyens de manutention comprennent un treuil 70 embarqué à bord du navire 3 et permettant d'enrouler le câble 4 de sorte à permettre de tirer le poisson 2 vers le navire 3 et permettant de dérouler le câble 4 pour éloigner le poisson du navire porteur 3.

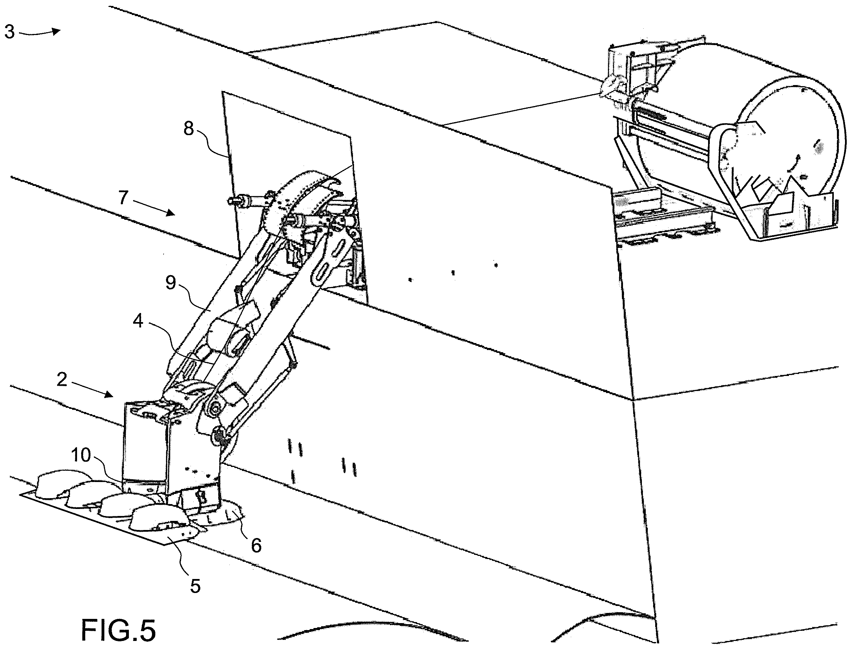

Comme visible sur la figure 5, les moyens de manutention 7 peuvent être aptes à capturer le poisson avant son entrée dans le navire porteur 3 et de le rentrer à l'intérieur du navire porteur 3 en le faisant passer à travers un ouverture 8 ménagée dans la coque du navire porteur 3, ou plus généralement de l'embarquer à bord du navire. Par capturer le poisson 2, on entend bloquer un mouvement du poisson au moins selon un axe vertical vers le haut par rapport au navire porteur 3. Les moyens de manutention sont embarqués à bord du navire porteur 3.

Dans la réalisation non limitative de la figure 5, les moyens de manutention 7 comprennent un bras 9 et une butée 10 traversée par le câble 4 et sur laquelle le deuxième corps 6 est destiné à venir en appui lors de l'enroulement du câble 4 de sorte à empêcher un mouvement du poisson 6, au moins en translation selon l'axe Z vers le haut par rapport au bras 9, et éventuellement en rotation autour de l'axe Z par rapport au bras 9. La tension du câble 4 maintient le deuxième corps 6 contre la butée 10.

La butée 10 comprend, par exemple, une fente ou un trou à travers laquelle ou lequel passe le câble. La butée 10 comprend, par exemple, deux rouleaux séparés par une fente à travers laquelle passe le câble 4. Les rouleaux sont par exemple aptes à pivoter par rapport au bras autour d'un axe qui est horizontal lorsque le bras est dans la configuration de capture.

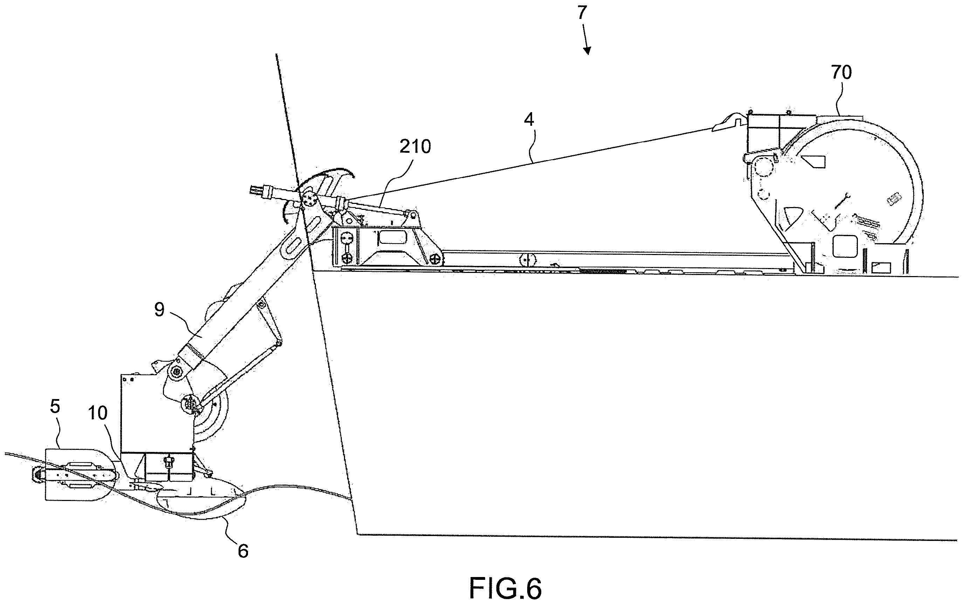

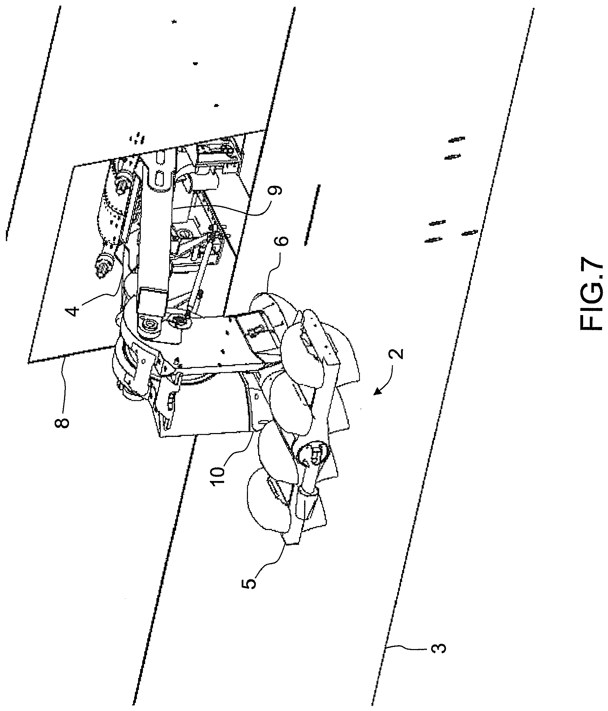

Le bras 9 est apte à être maintenu dans une position de capture visible sur les figures 5 et 6, dans laquelle la butée 10 s'étend à une première altitude par rapport au niveau de la mer, par exemple sensiblement au niveau de la mer, et dans une position de transfert, visible sur la figure 7 , dans laquelle la butée 10 s'étend à une altitude plus importante que dans la position de capture par rapport au niveau de la mer. Le bras 9 est par exemple apte à basculer par rapport au navire 3 pour passer de la position de transfert à la position de capture et inversement. Le bras 9 passe par exemple de la position de capture à la position de transfert par rotation par rapport au navire autour d'un axe parallèle à Y par état de mer calme. Le système sonar 1 comprend, par exemple, un premier actionneur 210 permettant de faire basculer le bras 9 par rapport à un pont du navire de la position de capture à la position de transfert et de le maintenir dans ces positions.

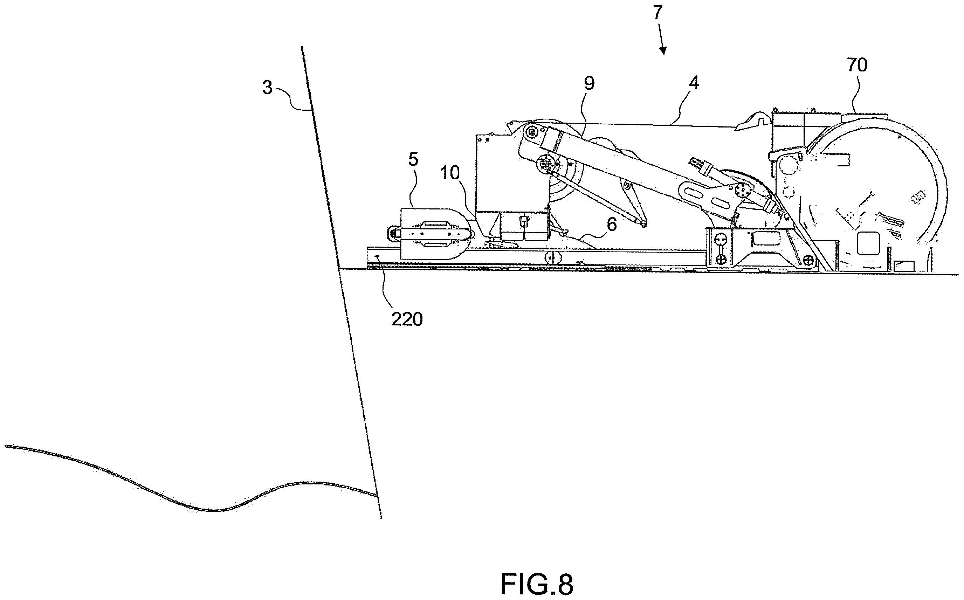

Le bras 9 est mobile par rapport au navire 3 de sorte à être apte à faire passer le bras de la position de transfert à une position de rangement dans laquelle le poisson 2, visible sur la figure 8, en butée contre la butée 10, est embarqué à bord du navire 3.

Le passage de position de transfert à la position de rangement est par exemple obtenu par translation du bras 9 selon l'axe longitudinal du navire porteur 3. Le système sonar comprend alors, par exemple, un guide 220 permettant de guider le bras selon cet axe. Le système sonar comprend par exemple un autre actionneur permettant d'assurer le passage de la position de transfert à la position de rangement.

Le poisson 2 est, par exemple, embarqué à bord du navire porteur 3 en passant au travers d'une ouverture 8 ménagée dans la coque du navire 3 lorsque le bras 9 passe de la position de transfert à la position de rangement.

Lorsque le premier corps 5 passe dans la position de capture avant sa récupération, le premier corps 5 reste presque immergé lorsque le poisson 2 se rapproche de la surface de l'eau pour venir en appui contre la butée 10, lors de la phase de capture du poisson 2 par les moyens de manutention 7, ce qui permet de limiter les risques de basculement du poisson 2 dans le plan vertical contenant son axe de déplacement avant la capture puisque la poussée d'Archimède s'exerçant sur le poisson 2 reste constante. Lorsque la butée 10 est configurée pour recevoir le deuxième corps 6, par exemple, lorsque la butée 10 présente une forme sensiblement complémentaire de celle du deuxième corps 6, par exemple une forme de selle de cheval, cela favorise la capture du poisson 2 dont le deuxième corps 6 vient naturellement se placer en regard de la butée 10 lors de l'enroulement du câble 4. Cette solution limite aussi les risques de détérioration de l'antenne d'émission qui a des chances limitées de venir heurter la butée.

La solution proposée est aussi compatible d'un système sonar dans lequel le câble est fixé ou relié à l'avant du poisson et dont l'axe de déplacement est sensiblement l'axe de la partie du câble tirant sur le poisson à proximité du point de fixation du câble sur le poisson et dans lequel les moyens de manutention comprennent un treuil embarqué à bord du navire permettant d'enrouler et dérouler le câble et une rampe inclinée par rapport au plan horizontal située à l'arrière du navire porteur de sorte à permettre d'embarquer le poisson 2 à bord du navire porteur 3 en tirant sur le poisson 2 vers l'avant au moyen du câble, par enroulement du câble au moyen du treuil, jusqu'à ce que le poisson pénètre dans le navire porteur en glissant sur la rampe inclinée.

La solution proposée permet également de faciliter le stockage du premier corps 5 sur un touret car son axe est parallèle à l'axe de rotation du treuil. Cela permet également de maintenir le premier corps 5 en appui contre le treuil sur toute la longueur du premier corps 5.

Comme visible sur la figure 3, le premier corps 5 s'étend longitudinalement selon l'axe l, depuis une première extrémité longitudinale E1 jusqu'à une deuxième extrémité longitudinale E2.

Avantageusement, comme représenté sur les figures, l'axe de rotation est situé sensiblement à égale distance, selon l'axe longitudinal l, entre les deux extrémités longitudinales E1 et E2 du premier corps 5. Cette caractéristique permet de conserver le centrage du premier corps 5 par rapport au deuxième corps 6 lors du passage de la position opérationnelle à la position de capture ce qui est favorable au maintien d'une assiette constante.

En variante, l'axe longitudinal est à distance différente des deux extrémités longitudinales D1 et D2 selon l'axe longitudinal l.

Avantageusement, le premier corps 5 est symétrique par rapport à un plan vertical contenant l'axe de rotation x et par rapport à un plan sensiblement horizontal contenant l'axe de rotation x, lorsque le poisson 2 totalement immergé est remorqué par le navire porteur 3 et le premier corps 5 est dans la position opérationnelle. Autrement dit, le premier corps 5 est symétrique par rapport à un premier plan défini par l'axe longitudinal l et l'axe de rotation x, dans la position opérationnelle, et aussi par rapport à un plan contenant l'axe et perpendiculaire à ce premier plan. Ainsi, le premier corps 5 est aussi symétrique par rapport à ces deux plans dans la position de capture. Autrement dit, le premier corps 5 est aussi symétrique par rapport à ces deux plans, lorsque le poisson 2 totalement immergé est remorqué par le navire porteur 3 et le premier corps 5 est dans la position de capture. Cela permet de ne créer aucun déséquilibre hydrodynamique, lié à la trainée, lors du passage de la position de capture à la position opérationnelle car les couples induits par la traînée ne changent pas. En variante, le premier corps est asymétrique par rapport à un de ces deux plans ou par rapport à ces deux plans.

Avantageusement, le centre de gravité du premier corps 5 est situé sur l'axe x. La position de ce centre de gravité est ainsi inchangée lors du passage de la position de capture à la position opérationnelle. Cela permet de de ne créer aucun déséquilibre de gravité lors du passage de la position de capture à la position opérationnelle. En variante, le centre de gravité du premier corps 5 est situé à distance de l'axe x. Avantageusement, le premier corps 5 comprend un premier ensemble d'au moins un empennage V1, V2 étant vertical, par exemple ayant une fonction de dérive, lorsque le premier corps 5 est dans la position opérationnelle et un deuxième ensemble d'au moins un empennage H1, H2 étant un empennage horizontal lorsque le premier corps 5 occupe la position opérationnelle. Le premier ensemble d'au moins un empennage V1, V2 présente une fonction de stabilisation du poisson 2 en lacet et le deuxième ensemble d'au moins un empennage H1, H2 présente une fonction de stabilisation du poisson 2 en tangage lorsque le premier corps 5 est dans la position opérationnelle. Ainsi, lorsque le premier corps 5 est dans la position de capture, le premier ensemble d'au moins un empennage V présente une fonction de stabilisation du poisson 2 en lacet et le deuxième ensemble d'au moins un empennage présente une fonction de stabilisation en tangage du poisson 2 lorsque le premier corps 5 est dans la position opérationnelle. Autrement dit, les empennages conservent des fonctions d'empennage dans les deux positions (opérationnelle et de capture), les empennages verticaux dans une des positions devenant des empennages horizontaux dans l'autre position et inversement. En variante, le premier corps 5 est dépourvu d'empennage vertical lorsque le premier corps 5 est dans la position opérationnelle et/ou le premier corps est dépourvu d'empennage horizontal lorsque le premier corps 5 occupe la position opérationnelle

Sur la réalisation des figures, comme visible sur la figure 3, le premier corps 5 comprend une structure 51, 52 qui est verticale dans la position opérationnelle, le poisson 2 étant remorque. La structure 51, 52 forme un empennage vertical supérieur V2 et un empennage vertical inférieur V1 coplanaires et situés de part et d'autre de l'axe x. L'empennage V1 est situé de l'autre côté d'un plan horizontal contenant l'axe x par rapport à l'empennage V2 et à une profondeur inférieure à l'empennage V2, dans la configuration opérationnelle de la figure 3.

L'empennage V1 est situé de l'autre côté d'un plan vertical contenant l'axe x par rapport à l'empennage dans la position de capture de la figure 4.

Les empennages V1 et V2 sont avantageusement agencés de sorte à être sensiblement symétrique l'un de l'autre par rapport au plan horizontal contenant l'axe x, dans la position opérationnelle de la figure 3 (ce plan est aussi le plan x-y). Ils sont alors sensiblement symétriques l'un de l'autre par rapport au plan vertical contenant l'axe x dans la position de capture de la figure 4 (ce plan est aussi le plan x-z). En variante, les empennages ne sont pas symétriques l'un de l'autre par rapport au plan horizontal contenant l'axe x, dans la position opérationnelle.

Les empennages V1 et V2 sont avantageusement agencés de sorte à être chacun sensiblement symétrique par rapport au plan vertical contenant l'axe x, dans la position opérationnelle de la figure 3 (ce plan est aussi le plan x-z). Ils sont alors chacun sensiblement symétriques par rapport au plan horizontal contenant l'axe x dans la position de capture de la figure 4 (ce plan est aussi le plan x-y). En variante, au moins un des empennages est asymétrique par rapport au plan vertical contenant l'axe x, dans la position opérationnelle.

La structure 51, 52 est munie de carénages R comprenant une partie bâbord Rb et une partie à tribord Rt (dans la position opérationnelle de la figure 3) délimitant les émetteurs E et formant, des excroissances sur les empennages V1 et V2. Ces carénages Rb, Rt remplissent la fonction d'empennages horizontaux par leur surfaces horizontales H1b, H1t et H2b, H2t.

Chaque carénage Rb ou Rt comprend avantageusement des empennages H1b, H2b pour Rb et H1t, H2t, pour Rt, ces empennages sont dans la position opérationnelle de la figure 3.

Le deuxième corps 6 comprend, par exemple, également des ailes 61 et 62 ayant, par exemple, une fonction de portance vers le bas lorsque s'accroît la vitesse de remorquage.

La solution proposée présente l'avantage d'être compatible avec un deuxième corps du type du corps pesant représenté sur la figure 9. Il n'est pas nécessaire de modifier totalement le corps pesant 102 de la figure 9 pour y ménager une ouverture de sorte qu'il soit susceptible de loger le premier corps.

Le poisson 2 de la solution proposée présente une longueur limitée dans les deux positions (opérationnelle et capture), ce qui facilite son stockage à bord du navire porteur.

L'invention se rapporte également à un procédé de récupération d'un navire à bord d'un navire porteur depuis une position initiale dans laquelle le poisson 2 totalement immergé à une profondeur initiale est remorqué par le navire porteur de surface et dans laquelle le premier corps occupe la position opérationnelle, le procédé comprenant :
- une étape de rotation du premier corps 5 autour de l'axe x jusqu'à la position de capture alors que le poisson est totalement immergé est à une deuxième profondeur moins importante que la profondeur initiale,
- suivie d'une étape d'émersion du poisson 2 et d'une étape d'embarquement du poisson 2 à bord du navire porteur.

Avantageusement, le premier corps 5 est dans la position de capture lors des étapes d'émersion et d'embarquement du poisson à bord du navire porteur.

Avantageusement l'étape de rotation est mise en oeuvre lorsque la profondeur du poisson ne permet plus des émissions sonar efficace et nettement avant de passer dans le sillage des hélices ou de tout autre système de propulsion.

L'étape de rotation est par exemple mise en oeuvre lorsque le poisson est situé à une profondeur comprise entre 10 mètres et 20 mètres.

Avantageusement, le procédé comprend, préalablement à l'étape de rotation, une étape d'enroulement du câble de sorte que le poisson passe de la profondeur initiale à la deuxième profondeur qui est profondeur requise pour effectuer la rotation.

Dans la réalisation des figures, l'ensemble du premier corps 5 est relié au deuxième corps 6 par une seule liaison pivot de sorte que l'ensemble du premier corps 5 est entraîné en rotation autour de l'axe x par rapport au deuxième corps 6.

En variante, le premier corps 5 comprend deux parties reliées au deuxième corps 6 par deux liaisons pivot distinctes de sorte que ces parties soient aptes à pivoter indépendamment l'une de l'autre par rapport au deuxième corps 6 autour de l'axe x.

Le câble 4 est avantageusement relié au poisson 2 de sorte que le câble soit destiné à tirer le poisson sensiblement en un point de tire de même coordonnée que le centre de gravité du poisson 2 selon l'axe x. Cela permet d'obtenir une assiette de poisson sensiblement horizontale lorsque le poisson est totalement immergé et remorqué par le navire porteur 3. En variante, le câble 4 est relié au poisson 2 de sorte que le câble soit destiné à tirer le poisson sensiblement en un point de tire distant du centre de gravité du poisson 2 selon l'axe x.

Le câble 4 est avantageusement relié au poisson 2 de sorte que le câble soit destiné à tirer le poisson sensiblement en un point de tire de même coordonnée que le centre de gravité du poisson 2 selon l'axe y. En variante, le câble 4 est relié au poisson 2 de sorte que le câble soit destiné à tirer le poisson sensiblement en un point de tire distant du centre de gravité du poisson 2 selon l'axe y.

Le câble 4 est avantageusement relié au poisson 2 de sorte que le câble soit destiné à tirer le poisson sensiblement en un point de tire destiné à être à une profondeur inférieure à celle du centre de gravité du poisson lorsque le poisson 3 est remorqué par le navire 3 et totalement immergé. Cela permet d'obtenir un certain couple de rappel en roulis pour obtenir une gîte nulle et participe à l'obtention d'une assiette sensiblement horizontale. En variante, le point de tire est destiné à être à une profondeur supérieure ou égale à celle du centre de gravité du poisson lorsque le poisson 3 est remorqué par le navire 3 et totalement immergé.

## Revendications

1. Système sonar (1) comprenant un poisson (2) comprenant un premier corps (5) relié à un deuxième corps (6), le premier corps (5) étant allongé selon un axe longitudinal (l) et comprenant une pluralité d'émetteurs acoustiques répartis le long de l'axe longitudinal (I), le système sonar (1) comprenant un câble (4) relié au deuxième corps (6) et via lequel un navire porteur (3) de surface est destiné à remorquer le poisson (2), le premier corps (5) étant monté pivotant, par rapport au deuxième corps (6), autour d'un axe de rotation (x) de sorte que, le premier corps (5) est apte à passer, par pivotement par rapport au deuxième corps (6) autour de l'axe de rotation (x), d'une position opérationnelle à une position de capture ; **caractérisé en ce que** l'axe de rotation (x) étant sensiblement un axe de déplacement du poisson (2), l'axe longitudinal (I) étant sensiblement vertical dans la position opérationnelle du premier corps (5) et étant sensiblement horizontal dans la position de capture du premier corps (5), lorsque le poisson (2) est totalement immergé et remorqué par le navire porteur (3).

2. Système sonar selon la revendication 1, dans lequel l'axe de rotation (x) s'étend sensiblement horizontalement lorsque le poisson (2) est remorqué par le navire porteur (3).

3. Système sonar (1) selon l'une quelconque des revendications précédentes, dans lequel le câble (4) est relié au deuxième corps (6) de sorte que le câble tire le poisson (2) par le dessus du deuxième corps (6).

4. Système sonar (1) selon l'une quelconque des revendications précédentes, dans lequel l'axe de rotation (x) est situé sensiblement à égale distance entre deux extrémités longitudinales du premier corps (5).

5. Système sonar (1) selon l'une quelconque des revendications précédentes, dans lequel le premier corps (5) est sensiblement symétrique par rapport au plan vertical contenant l'axe de rotation (x) et le câble (4) et par rapport à un plan sensiblement horizontal contenant l'axe de rotation (x), lorsque le poisson (2) est remorqué par le navire porteur (3) et le premier corps (5) est dans la position opérationnelle.

6. Système sonar (1) selon l'une quelconque des revendications précédentes, dans lequel un centre de gravité du premier corps (5) est situé sur l'axe (x)

7. Système sonar selon l'une quelconque des revendications précédentes, dans lequel le premier corps (5) comprend un premier ensemble d'au moins un empennage étant vertical et ayant une fonction de dérive lorsque le premier corps (5) est dans la position opérationnelle et au moins un deuxième ensemble d'au moins un empennage étant horizontal lorsque le premier corps (5) est dans la position opérationnelle.

8. Système sonar selon l'une quelconque des revendications précédentes, dans lequel le poisson (2) présente une flottabilité négative.

9. Système sonar selon l'une quelconque des revendications précédentes, comprenant des moyens de manutention comprenant un treuil permettant d'enrouler et de dérouler le câble (4) et un bras (9) comprenant une extrémité munie d'une butée, le bras (9) étant apte à être maintenu dans une position de réception par rapport au navire porteur (3), dans laquelle la butée est située au-dessus de la surface de l'eau à une première hauteur par rapport à la surface de l'eau, la butée étant traversée par le câble de sorte que le deuxième corps (6) est apte à venir en appui sur la butée lors de l'enroulement du câble de sorte à bloquer le mouvement du deuxième corps (6) par rapport au bras vers le haut, le bras étant mobile par rapport au navire porteur (3) de sorte à être apte à être dans une position de rangement par rapport au navire porteur (3) dans laquelle le poisson (2) est embarqué à bord du navire porteur (3), le deuxième corps (6) étant en butée contre la butée (10).

10. Système sonar selon l'une quelconque des revendications précédentes comprenant le navire porteur (3).

## Patentansprüche

1. Sonarsystem (1), umfassend einen Schleppfisch (2), der einen ersten Körper (5) umfasst, der mit einem zweiten Körper (6) verbunden ist, wobei sich der erste Körper (5) entlang einer Längsachse (I) erstreckt und eine Vielzahl von akustischen Sendern umfasst, die entlang der Längsachse (I) verteilt sind, wobei das Sonarsystem (1) ein Kabel (4) umfasst, das mit dem zweiten Körper (6) verbunden ist und über das ein Oberflächen-Trägerschiff (3) dazu bestimmt ist, den Schleppfisch (2) zu schleppen, wobei der erste Körper (5) in Bezug auf den zweiten Körper (6) um eine Drehachse (x) schwenkbar montiert ist, sodass der erste Körper (5) in der Lage ist, durch Schwenken in Bezug auf den zweiten Körper (6) um die Drehachse (x) von einer Betriebsstellung in eine Fangstellung zu wechseln; **dadurch gekennzeichnet, dass** die Drehachse (x) im Wesentlichen eine Bewegungsachse des Schleppfisches (2) ist, wobei die Längsachse (I) in der Betriebsposition des ersten Körpers (5) im Wesentlichen vertikal ist und in der Fangposition des ersten Körpers (5) im Wesentlichen horizontal ist, wenn der Schleppfisch (2) vollständig untergetaucht ist und von dem Trägerschiff (3) geschleppt wird.

2. Sonarsystem nach Anspruch 1, wobei sich die Drehachse (x) im Wesentlichen horizontal erstreckt, wenn der Schleppfisch (2) vom Trägerschiff (3) geschleppt wird.

3. Sonarsystem (1) nach einem der vorhergehenden Ansprüche, wobei das Kabel (4) mit dem zweiten Körper (6) verbunden ist, sodass das Kabel den Schleppfisch (2) an der Oberseite des zweiten Körpers (6) zieht.

4. Sonarsystem (1) nach einem der vorhergehenden Ansprüche, wobei die Drehachse (x) im Wesentlichen in gleichem Abstand zwischen zwei Längsenden des ersten Körpers (5) angeordnet ist.

5. Sonarsystem (1) nach einem der vorhergehenden Ansprüche, wobei der erste Körper (5) im Wesentlichen symmetrisch in Bezug auf die vertikale Ebene, welche die Drehachse (x) und das Kabel (4) enthält, und in Bezug auf eine im Wesentlichen horizontale Ebene, welche die Drehachse (x) enthält, ist, wenn der Schleppfisch (2) von dem Trägerschiff (3) geschleppt wird und der erste Körper (5) in der Betriebsstellung ist.

6. Sonarsystem (1) nach einem der vorhergehenden Ansprüche, wobei ein Schwerpunkt des ersten Körpers (5) auf der Achse (x) angeordnet ist.

7. Sonarsystem nach einem der vorhergehenden Ansprüche, wobei der erste Körper (5) eine erste Anordnung von mindestens einem Leitwerk umfasst, das vertikal ist und eine Driftfunktion hat, wenn sich der erste Körper (5) in der Betriebsstellung befindet, und mindestens eine zweite Anordnung von mindestens einem Leitwerk, das horizontal ist, wenn sich der erste Körper (5) in der Betriebsstellung befindet.

8. Sonarsystem nach einem der vorhergehenden Ansprüche, wobei der Schleppfisch (2) einen negativen Auftrieb aufweist.

9. Sonarsystem nach einem der vorhergehenden Ansprüche, umfassend ein Handhabungsmittel, das eine Winde zum Auf- und Abwickeln des Kabels (4) und einen Arm (9) umfasst, der ein Ende umfasst, das mit einem Anschlag versehen ist, wobei der Arm (9) geeignet ist, in einer Aufnahmeposition in Bezug auf das Trägerschiff (3) gehalten zu werden, in der sich der Anschlag über der Wasseroberfläche in einer ersten Höhe in Bezug auf die Wasseroberfläche befindet, wobei der Anschlag vom Kabel durchquert wird, sodass der zweite Körper (6) geeignet ist, beim Aufwickeln des Kabels gegen den Anschlag zu stoßen, um die Bewegung des zweiten Körpers (6) in Bezug auf den Arm nach oben zu blockieren, wobei der Arm in Bezug auf das Trägerschiff (3) beweglich ist, sodass er geeignet ist, sich in einer Verstauungsposition in Bezug auf das Trägerschiff (3) zu befinden, in welcher der Schleppfisch (2) an Bord des Trägerschiffs (3) mitgeführt wird, wobei der zweite Körper (6) gegen den Anschlag (10) stößt.

10. Sonarsystem nach einem der vorhergehenden Ansprüche, umfassend das Trägerschiff (3).

## Claims

1. A sonar system (1) comprising a towfish (2) comprising a first body (5) connected to a second body (6), with the first body (5) extending along a longitudinal axis (I) and comprising a plurality of acoustic transmitters distributed along the longitudinal axis (I), the sonar system (1) comprising a cable (4) connected to the second body (6) and via which a surface carrier vessel (3) is intended to tow the towfish (2), the first body (5) being pivotally mounted, relative to the second body (6), about an axis of rotation (x) so that the first body (5) is capable of transitioning, by pivoting relative to the second body (6) about the axis of rotation (x), from an operational position to a capture position, **characterised in that** the axis of rotation (x) is substantially an axis of movement of the towfish (2), the longitudinal axis (I) is substantially vertical in the operational position of the first body (5) and is substantially horizontal in the capture position of the first body (5), when the towfish (2) is fully submerged and towed by the carrier vessel (3).

2. The sonar system according to claim 1, wherein the axis of rotation (x) extends substantially horizontally when the towfish (2) is towed by the carrier vessel (3).

3. The sonar system (1) according to any one of the preceding claims, wherein the cable (4) is connected to the second body (6) so that the cable pulls the towfish (2) from the top of the second body (6).

4. The sonar system (1) according to any one of the preceding claims, wherein the axis of rotation (x) is located substantially equidistant between two longitudinal ends of the first body (5).

5. The sonar system (1) according to any one of the preceding claims, wherein the first body (5) is substantially symmetrical relative to the vertical plane containing the axis of rotation (x) and the cable (4) and relative to a substantially horizontal plane containing the axis of rotation (x), when the towfish (2) is towed by the carrier vessel (3) and the first body (5) is in the operational position.

6. The sonar system (1) according to any one of the preceding claims, wherein a centre of gravity of the first body (5) is located on the axis (x).

7. The sonar system according to any one of the preceding claims, wherein the first body (5) comprises a first assembly of at least one tail unit that is vertical and that has a drift function when the first body (5) is in the operational position and at least one second assembly of at least one tail unit that is horizontal when the first body (5) is in the operational position.

8. The sonar system according to any one of the preceding claims, wherein the towfish (2) has negative buoyancy.

9. The sonar system according to any one of the preceding claims, comprising handling means comprising a winch allowing the cable (4) to be wound in and wound out and an arm (9) comprising an end provided with a stop, the arm (9) being capable of being held in a receiving position relative to the carrier vessel (3), in which position the stop is located above the surface of the water at a first height relative to the surface of the water, the stop being traversed by the cable so that the second body (6) is capable of coming into abutment on the stop when the cable is wound in so as to block the upward movement of the second body (6) relative to the arm, the arm being movable relative to the carrier vessel (3) so as to be able to assume a stowed position relative to the carrier vessel (3), in which position the towfish (2) is on board the carrier vessel (3), the second body (6) being in abutment against the stop (10).

10. The sonar system according to any one of the preceding claims, comprising the carrier vessel (3).
